# FASCICULE DE BREVET EUROPEEN

(11) **EP 3 335 965 B1**
(45) Date de publication et mention de la délivrance du brevet: **24.04.2019**
(21) Numéro de dépôt: 17204568.4
(22) Date de dépôt: 30.11.2017
(51) Int. Cl.: B62B 7/12, B62B 9/10

(54) **SUPPORT CONVERTIBLE ENTRE UNE POSITION ALLONGÉE ET AU MOINS UNE POSITION ASSISE POUR POUSSETTE POUR ENFANT, ET POUSSETTE CORRESPONDANTE**
KINDERWAGENGESTELL, DAS ZWISCHEN EINER LIEGE- UND MINDESTENS EINER SITZPOSITION VERSTELLBAR IST, UND ENTSPRECHENDER KINDERWAGEN
SUPPORT CONVERTIBLE BETWEEN AN EXTENDED POSITION AND AT LEAST ONE SEATED POSITION FOR CHILD PUSHCHAIR, AND CORRESPONDING PUSHCHAIR

(30) Priorité: 13.12.2016 FR 1662390
(43) Date de publication de la demande: 20.06.2018
(73) Titulaire: Dorel France, 49309 Cholet Cedex (FR)
(72) Inventeur: MOSTERT, Marc, PAYS-BAS (NL)
(74) Mandataire: Vidon Brevets & Stratégie

(56) Documents cités:
- EP-A2- 0 347 361
- EP-A2- 1 795 424
- WO-A1-2006/034615

## Description

### 1. Domaine de l'invention

Le domaine de l'invention est celui de la puériculture, et en particulier des voitures d'enfants ou poussettes (ce terme englobant tous les dispositifs de puériculture munis de roues et aptes à transporter un ou plusieurs enfants).

Plus précisément, le domaine de l'invention est celui des supports d'enfant pour poussettes, destinés à recevoir un enfant à transporter. L'invention concerne en particulier les supports convertibles entre une position allongée et une position assise, adaptés pour transporter un enfant respectivement en position allongée ou un enfant en position assise.

Pendant les premiers mois de sa vie, l'enfant ne peut pas ou peu se tenir assis et a un grand besoin de dormir. Il doit donc être transporté allongé, par exemple dans un landau. En grandissant, il peut être plus adapté de le transporter en position assise.

Il est également parfois souhaitable d'installer l'enfant en position allongée ou en position assise, selon que l'enfant est endormi ou éveillé.

### 2. Art antérieur

Il existe en conséquence des châssis de poussette sur lesquels peuvent être montés alternativement et de manière interchangeable une nacelle, une coque et/ou un hamac.

Ce genre de poussette comprend généralement un châssis principal, sur lequel est monté de manière amovible le support d'enfant. Le support d'enfant peut par exemple être monté sur le châssis par le biais d'un système de type « modulo-clip » (marque déposée et faisant l'objet des documents de brevet FR2753158 et FR2753159 au nom de la Demanderesse) ou similaire. Ce système offre aussi aux parents la liberté d'utiliser le support d'enfant seul ou couplé à la poussette, et de changer le support utilisé sur la poussette, en fonction des situations qu'ils rencontrent au quotidien.

Toutefois, une fois le support choisi et installé, ce genre de poussette reste peu polyvalent. En effet, si la nacelle est par exemple installée, l'enfant doit rester allongé jusqu'au retour à la maison ou à la voiture, les parents ne transportant généralement pas le hamac avec eux. Par ailleurs, l'achat de deux ou plusieurs supports (nacelle, coque, hamac, etc.) est onéreux, et il est nécessaire de stocker le ou les supports non utilisés.

Il a donc été proposé des supports offrant la possibilité d'être convertis entre une position allongée et une position assise, et vice versa, rapidement, sans besoin pour cela de les séparer du châssis.

Des supports convertibles de la position allongée en un siège, pour poussette d'enfant, ont été proposés, qui comportent généralement un cadre supérieur, monté pivotant sur le châssis de la poussette, et supportant plusieurs portions articulées de réception de l'enfant, définissant une surface contre laquelle l'enfant repose, les angles entre ces éléments articulés variant selon la position sélectionnée.

Dans la position allongée, le cadre supérieur s'étend horizontalement, et porte une surface également horizontale sur lequel un enfant peut être installé allongé. Cette surface est donc composée de plusieurs portions articulées, reliées au cadre supérieur par des sangles ou des suspentes. Afin de faire passer le support en position de siège, et vice versa, on bascule le cadre supérieur, et la position des sangles ou des suspentes est adaptée, automatiquement sous l'effet du basculement et/ou par réglage de l'utilisateur. Les différentes portions forment alors respectivement le dossier, l'assise et le soutien de jambe d'un siège sur lequel l'enfant peut être installé en position assise.

Une telle approche est par exemple décrite dans le document EP1795424. Le cadre supérieur porte notamment des suspentes reliées au dossier, à l'assise et au repose-pieds. Ces suspentes peuvent notamment être des sangles, de longueur ajustable, ou des plaques articulées entre elles.

Ces systèmes présentent certains inconvénients, du fait des manipulations nécessaires et/ou de leur complexité (réglage des sangles notamment), en particulier par la présence d'un repose-pieds complexe, et qui limite en outre les possibilités d'utilisation de la poussette, dès que l'enfant est trop grand pour être installé en position assise, ses pieds venant en appui sur le repose-pieds. Un support convertible avec tous les caractéristiques du préambule de la revendication 1 est connue du document EP1795424A2.

Il existe donc un besoin d'une nouvelle approche des systèmes combinant les fonctions de landau (position allongée) et de siège (position assise), dont les manipulations sont simples et ergonomiques, et qui puissent être utilisées pendant une plus longue période de temps, y compris lorsque l'enfant grandit.

### 3. Exposé de l'invention

La présente invention a pour objectif de pallier ces inconvénients de l'art antérieur.

Cet objectif, ainsi que d'autres qui apparaîtront par la suite, est atteint à l'aide d'un support convertible pour poussette pour enfant, comprenant un cadre portant trois éléments de réception d'un enfant articulés deux à deux, de façon à pouvoir prendre au moins deux positions :
- une position allongée, dans laquelle le cadre s'étend essentiellement dans un plan supérieur sensiblement horizontal et les éléments de réception sont sensiblement alignés dans un plan de base sensiblement horizontal, de façon à recevoir un enfant en position allongée ;
- au moins une position assise, dans laquelle les éléments de réception sont disposés de façon à définir respectivement un soutien de jambes, une assise et un dossier, de façon à recevoir un enfant en position assise.

Selon l'invention, le cadre présente deux montants de cadre latéraux, et une traverse supérieure et une traverse inférieure reliant les montants de cadre, et les montants de cadre présentent deux portions formant entre elles un angle strictement inférieur à 180°, de façon que, dans la position allongée, une portion principale des montants s'étende sensiblement horizontalement depuis la traverse supérieure, et qu'une portion finale s'étende vers le bas depuis la portion principale vers la traverse inférieure, pour que celle-ci s'étende sensiblement dans le plan de base.

En d'autres termes, dans la position allongée, la portion finale comportant la traverse inférieure du cadre (partie proche des pieds de l'enfant) est inclinée, relativement au reste du cadre qui est sensiblement parallèle au plan de base formé par les éléments de réception de l'enfant, vers le soutien de jambes de façon à ce que la traverse inférieure se trouve sensiblement dans le même plan que celui-ci.

Le basculement du cadre, par un utilisateur, permet de faire passer les éléments de réception de l'enfant de la position allongée à une position assise et vice versa, par l'intermédiaire de la traverse inférieure du cadre solidarisée au soutien de jambes. Ainsi, la traverse inférieure du cadre guide en basculement l'élément de soutien de jambes.

L'angle formé sur le cadre, qui peut notamment être compris entre 150 et 180°, assure le bon fonctionnement du système.

Selon un aspect particulier de l'invention, l'élément de soutien de jambes est articulé sur la traverse inférieure.

Selon un mode de réalisation particulier, la traverse inférieure porte une articulation unique en position centrale.

Ceci offre au moins un premier degré de mobilité à l'ensemble formé par le cadre et les trois éléments de réception, et rend en particulier possible le guidage de l'élément de soutien de jambes entre ses deux positions.

Selon un mode de réalisation particulier, la portion finale des montants de cadre s'étend sensiblement verticalement, dans la ou au moins une position assise.

La portion finale est ainsi sensiblement parallèle à la portion de réception des jambes de l'enfant. Par ailleurs, la hauteur de cette portion finale, dans la ou au moins une position assise correspond sensiblement à la hauteur de la portion de jambes. Ces aspects garantissent le bon fonctionnement de l'invention, selon ce mode de réalisation, c'est-à-dire permettent le passage d'une position à l'autre du support convertible, par simple basculement du cadre.

Selon un mode de réalisation particulier, le support convertible comprend un élément de finition amovible et/ou escamotable, apte à fermer le contour défini dans ledit plan supérieur par ladite traverse supérieure et lesdites portions principales des montants de cadre, dans ladite position allongée.

Ainsi, lorsque l'élément de finition est dans une position déployée (correspondant à la position allongée), le support convertible est complètement « fermé » (formant un landau) et l'enfant y est retenu en toute sécurité, sans risque de glisser ou de placer ses pieds hors du support. Lorsque l'élément de finition est dans une position escamotée (correspondant à la ou au moins une position assise) ou lorsqu'il est retiré, un espace est ouvert pour les jambes et/ou pieds de l'enfant.

Selon un mode de réalisation particulier, l'élément de finition présente au moins un arceau articulé sur les montants de cadre, au voisinage de la liaison entre leurs portion principale et leur portion finale.

Par ailleurs, l'arceau peut porter un premier bord d'une toile de finition, également solidarisée à la traverse inférieure et/ou aux portions finales des montants latéraux.

Le déplacement de l'arceau articulé entraîne ainsi le déplacement de la toile entre deux positions, à savoir une position haute dans laquelle la toile ferme le contour formé par le support convertible en position allongée de manière à entourer totalement l'enfant qui y est allongé, et une position basse dans laquelle la toile est ramassée sur elle-même, l'arceau étant au contact de la traverse inférieure, de façon à libérer un espace pour les pieds et/ou jambes de l'enfant.

Selon un mode de réalisation particulier, le support convertible comprend deux montants de solidarisation latéraux verticaux portant dans leur partie supérieure le cadre, et dans leur partie inférieure des connecteurs de solidarisation à un châssis de poussette.

Ainsi, le support convertible peut rapidement et facilement être installé sur la poussette lorsque nécessaire.

Selon un mode de réalisation particulier, les montants de solidarisation portent, mobiles en rotation, deux suspentes supportant l'assise et s'étendant parallèlement l'une à l'autre.

Ces deux suspentes forment un parallélogramme déformable avec l'assise. Elles permettent à la fois de soutenir l'assise et de la guider en déplacement, dans un mouvement plan, au cours du passage de la position allongée à l'au moins une position assise et vice versa.

Selon un mode de réalisation particulier, chacun des montants de solidarisation porte une traverse d'accrochage horizontale formant croix avec le montant de solidarisation, les suspentes étant montées sur la traverse d'accrochage, de part et d'autre du montant de solidarisation.

Les branches de la traverse horizontale permettent ainsi de déporter le point d'articulation de chaque suspente avec le montant de solidarisation, et par la même occasion le point de contact de chaque suspente avec l'assise. L'assise est ainsi soutenue sur une zone plus importante (définie par le parallélogramme déformable) assurant sa stabilité au cours de son déplacement.

Selon un autre mode de réalisation, la traverse d'accrochage s'étend sensiblement à égale distance du plan supérieur et du plan de base, dans la position allongée.

Selon un mode de réalisation particulier, une suspente du dossier est articulée sur le cadre.

Cette suspente permet à la fois de soutenir le dossier, et de le guider en déplacement entre la position allongée et l'au moins une position assise et vice versa.

Selon un mode de réalisation particulier, la suspente est articulée par rapport au dossier sensiblement en son milieu.

La suspente du dossier est fixée par rapport au dossier par le biais de l'articulation. Cette articulation au centre du dossier permet à la fois d'assurer l'équilibre du dossier dans son mouvement, et d'assurer au moins un degré de mobilité permettant le bon fonctionnement du système.

L'invention concerne également une poussette comprenant le support convertible entre une position allongée et au moins une position assise tel que décrit ci-dessus.

### 4. Liste des figures

D'autres caractéristiques et avantages de l'invention apparaîtront plus clairement à la lecture de la description suivante de différents modes de réalisation de l'invention, donnée à titre d'exemples illustratifs et non limitatifs, au regard des dessins annexés parmi lesquels :
- la **figure 1** illustre la structure du support convertible entre une position allongée et au moins une position assise ;
- les **figures 2A et 2B** sont des vues, de côté, du support convertible et illustrent respectivement la position assise et la position allongée ;
- les **figures 3A et 3B** sont des vues complémentaires en trois dimensions du support convertible dans la position allongée, respectivement vu de dessus et vu de dessous ;
- les **figures 4A et 4B** sont des vues d'une poussette sur laquelle est montée le support convertible, et illustrent respectivement la position allongée et la position assise ;
- la **figure 5** illustre la conversion de la position allongée à la position assise et vice versa ;
- la **figure 6** représente un mode de réalisation particulier de l'invention dans lequel un élément de finition amovible permet de refermer le support dans la position allongée ;
- les **figures 7 et 8** illustrent respectivement le support convertible dans la position assise, l'élément de finition étant replié sous le support de jambes, et dans la position allongée, l'élément de finition étant redressé;
- les **figures 9 et 10** illustrent respectivement le support convertible dans la position allongée et dans la position assise, et en particulier la mise en place automatique de parois latérales de protection de l'enfant en position allongée ;
- la **figure 11** présente un mode de réalisation particulier de l'invention dans lequel le cadre du support convertible comporte un élément de protection.

### 5. Description détaillée de différents modes de réalisation de l'invention

### 5.1 Principe général

Le principe général de l'invention repose sur un nouveau concept de support convertible entre une position allongée et au moins une position assise, destiné à être monté notamment sur une poussette d'enfant (et le cas échéant sur un bâti fixe), selon lequel le seul basculement du cadre du support convertible entraîne le passage d'une position allongée à au moins une position assise, et vice versa, grâce à la forme spécifique du cadre.

Un tel support convertible peut ainsi prendre deux positions distinctes adaptées à différents moments de la vie de l'enfant : une première position « allongée » permettant à l'enfant d'être allongé lors de son transport en poussette, par exemple pour dormir; au moins une deuxième position « assise » permettant à l'enfant d'être assis et d'interagir avec son environnement. Dans certains modes de réalisation, il est possible de prévoir plusieurs positions « assise », correspondant à des inclinaisons différentes.

Dans la position « allongée », les éléments constituant le support de réception de l'enfant (à savoir trois éléments formant respectivement un dossier, une assise, et un soutien de jambes dans a position « assise ») sont sensiblement alignés horizontalement, dans un premier plan, dit plan de base. Le cadre du support convertible s'étend alors au dessus de ce plan de base, sensiblement dans un second plan parallèle dit plan supérieur.

Selon l'invention, le cadre du support convertible peut être basculé, pour faire passer le support d'une position « allongée » à une position « assise » (en d'autres termes, le support passe ainsi d'une position où il forme sensiblement un landau à une position où il forme sensiblement un siège). Ce cadre présente deux bords latéraux, appelés montants de cadre, et deux bords d'extrémité inférieure et supérieure, appelés traverses de cadre, et s'étendant respectivement à proximité des pieds et à la tête de l'enfant installé dans le support convertible.

En pratique, les différents éléments constituant le cadre (montants et traverses) peuvent être formés dans une même pièce, par exemple tubulaire. Les liaisons entre les montants peuvent être à angle droit ou progressive, sous la forme de parties incurvées. De même, les montants et les traverses ne sont pas impérativement rectilignes, mais peuvent être courbes, voire présenter plusieurs courbes. Notamment, les traverses peuvent définir des arcs de cercle, d'ellipse ou d'hyperbole.

La traverse inférieure est solidarisée au soutien de jambes, de manière à se trouver dans le même plan que celui-ci (c'est-à-dire dans le plan de base), dans la position allongée.

Pour ceci, les montants de cadre présentent chacun deux portions distinctes, à savoir une portion principale située du côté de la portion de dossier et d'assise, et une portion finale située du côté de la portion de soutien des jambes.

Dans la position allongée la portion principale des montants s'étend sensiblement horizontalement depuis la traverse supérieure, soit dans le plan supérieur du cadre, tandis que la portion finale s'étend vers le bas depuis la portion principale selon un angle inférieur à 180°. Les portions finales des montants se rejoignent au niveau de la traverse inférieure du cadre de telle façon que la traverse inférieure se trouve sensiblement dans le plan de base.

Dans le mode de réalisation illustré, la liaison entre les deux portions est formée par une incurvation du montant. Dans d'autre mode de réalisation, les deux portions peuvent être des pièces distinctes..

### 5.2 Description de plusieurs modes de réalisation spécifiques

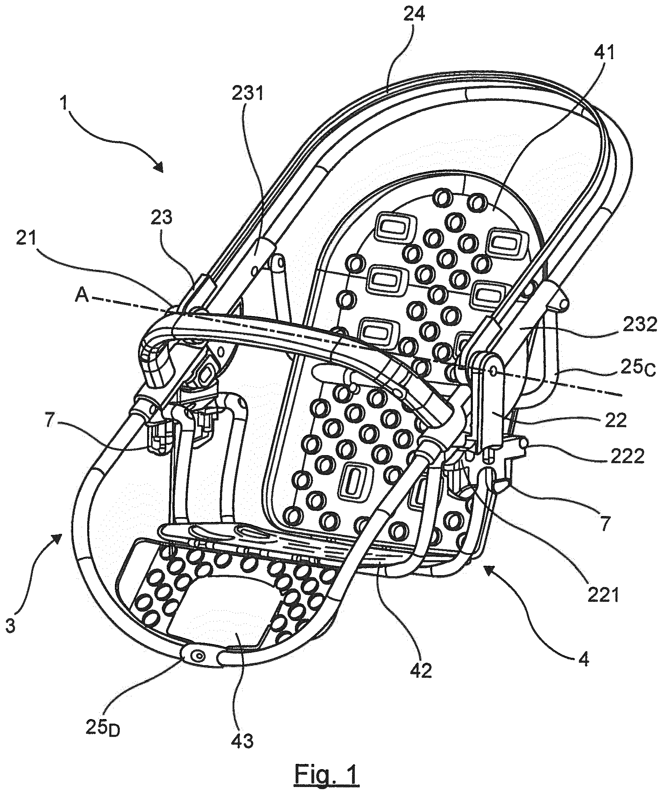

La structure d'un support convertible 1, selon l'invention, est représentée sur la **figure 1****.**

Une tel support convertible 1 comprend deux montants de solidarisation latéraux principaux 21, 22, sensiblement verticaux (c'est-à-dire perpendiculaires au sol) qui permettent de supporter un ensemble de réception de l'enfant formé d'un cadre 3 et d'un fond 4 constitué de trois portions articulées deux à deux, correspondant respectivement, dans une position assise à un dossier 41, une assise 42, et un soutien de jambes 43.

Dans le mode de réalisation illustré, le dossier présente une longueur sensiblement égale à la longueur réunie de l'assise et de la portion de jambes. Le dossier et l'assise représentent à peu près 3/4 de la longueur totale des éléments de support.

Les montants de solidarisation verticaux 21, 22 présentent chacun dans leur extrémité haute une liaison pivot, selon un premier axe A, avec un élément 23 de structure portant le cadre 3. Sur la **figure 1****,** cet élément de structure 23 présente une ou plusieurs (par exemple deux) régions 231, 232 de solidarisation au cadre 3, formant par exemple des tubes dans lesquels circulent les montants du cadre, pour unir le cadre 3 à cet élément de structure 23. D'autres configurations peuvent être envisagées pour la solidarisation du cadre. Dans certains modes de réalisations, les fonctions, ou au moins certaines d'entre elles, de l'élément de structure peuvent être assurées directement par le cadre.

L'élément de structure 23 est également en liaison pivot, selon ce même axe A, avec un arceau 24 de support d'un canopy (non représenté) permettant de faire varier de manière traditionnelle le déploiement du canopy entre une position repliée et une position dépliée.

Selon un mode de réalisation alternatif, l'axe A et l'axe de rotation du canopy peuvent être distincts, de façon que l'élément 23 et l'arceau 24 possèdent des axes de rotation différents par rapport aux montants latéraux de solidarisation 21, 22.

Outre le canopy, d'autres éléments pourront être montés en rotation sur les éléments 23 (par exemple un dispositif de protection et/ou un plateau destiné à recevoir les jouets de l'enfant ou une boisson (dit « child tray » en anglais)).

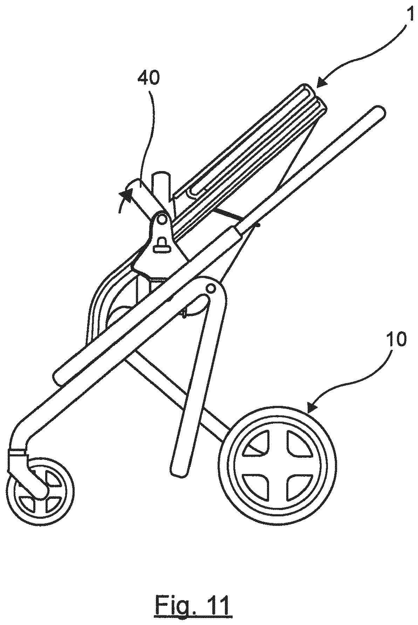

La **figure 11** illustre par exemple un tel dispositif de protection 40, par exemple un coussin (« crash pad » en anglais) ou une barre (« bumper bar » en anglais). Ce dispositif de protection 40 s'étend latéralement au dessus du support convertible 1 à la manière d'un bouclier. Ce dispositif peut aussi être monté en rotation par rapport au châssis de la poussette, par exemple sur les montants latéraux de solidarisation 21, 22.

Les montants de solidarisation verticaux 21, 22 comportent également chacun deux éléments d'accrochage transversaux 211, 212, 221, 222 s'étendant de part et d'autre du montant, formant une traverse d'accrochage sensiblement horizontale..

A l'extrémité de chaque élément d'accrochage est monté un élément de soutien 25_{A}, 25_{B} de l'assise 42, ou suspente, dont la base s'étend sous l'assise.

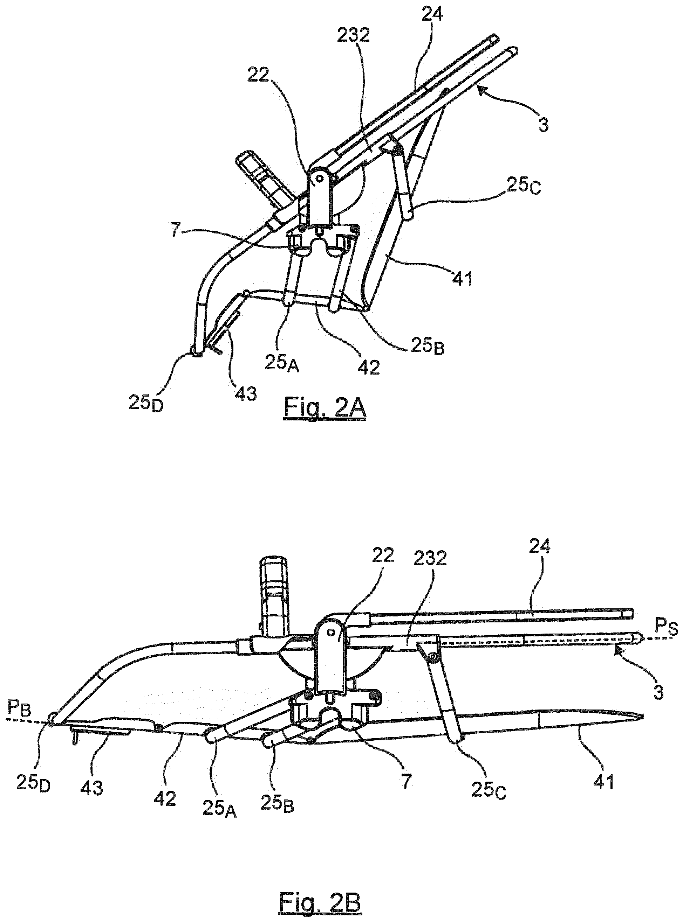

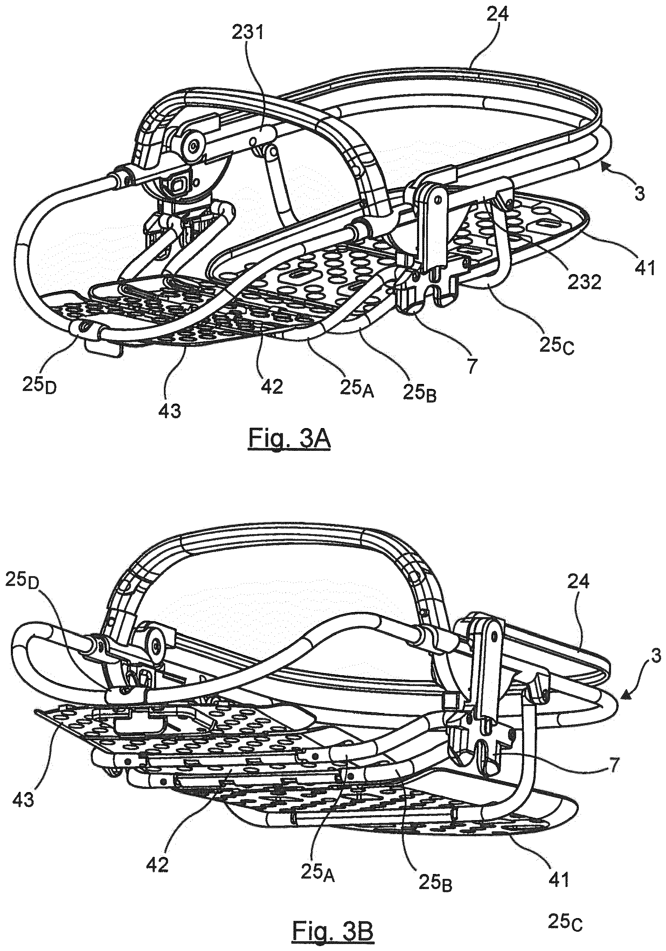

Ces suspentes 25_{A}, 25_{B} sont particulièrement visibles sur les **figures 2A, 2B****,** **3A et 3B****.**

Dans le mode de réalisation décrit, l'assise 42 est donc soutenue par deux suspentes 25_{A}, 25_{B}, sensiblement parallèles entre elles (la suspente 25_{A} peut être légèrement plus courte que la suspente 25_{B}, pour incliner légèrement l'assise dans la position de la figure 2A), formant sensiblement avec l'assise et les éléments d'accrochage transversaux 221, 222 un parallélogramme déformable.

Une troisième suspente 25_{C}, permettant de soutenir le dossier 41, est solidaire du cadre 3 et positionnée de manière à soutenir le dossier 41 dans sa partie centrale.

Ces trois suspentes 25_{A}, 25_{B}, 25_{C} sont montées sous les portions d'assise 42 et de dossier 41 respectivement, par exemple à l'aide d'ourlets et/ou de connecteurs permettant leur maintien et leur rotation.

La suspente 25_{C} est articulée au niveau du cadre supérieur, à l'élément 23 de maintien du cadre, dans le mode de réalisation illustré. En revanche, les suspentes 25_{A}, 25_{B} ne sont pas articulées au niveau de ce cadre supérieur 3, mais en une position intermédiaire définie par les éléments d'accrochage, de façon à permettre un mouvement optimisé.

Dans le mode de réalisation illustré, les suspentes 25_{A}, 25_{B}, 25_{C} sont formées chacune de tubes pliés, définissant un U dont les deux branches assurent une fonction de bielle et dont la base circule sous l'assise, respectivement le dossier (sur la figure 1, la partie arrière de ces tubes a été escamotée, pour faciliter la lecture)

Selon une autre approche, les suspentes peuvent également présenter deux bielles solidarisées chacune à un bord de l'assise (sans partie s'étendant sous l'assise).

La portion de soutien des jambes 43 est également reliée au cadre 3 via une liaison pivot 25_{D} formée ici d'une articulation centrale placée à l'extrémité et à l'extérieur de la portion de soutien de jambes 43. Ainsi, il n'y a pas de quatrième suspente pour cette portion, qui est reliée directement au cadre, et plus précisément à sa traverse inférieure.

Les trois suspentes 25_{A}, 25_{B}, 25_{C} et la liaison pivot 25_{D} constituent les seuls points de contact entre le cadre 3 et le fond 4 recevant l'enfant.

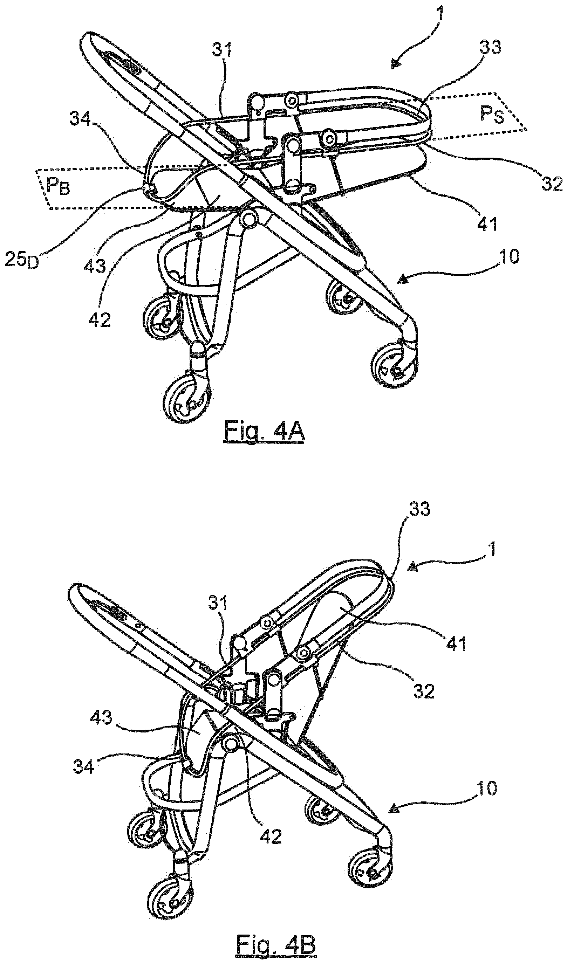

Les **figures 4A et 4B** représentent le support convertible 1 monté sur une poussette 10. Le support convertible 1 est fixé sur le châssis de la poussette 10 par le biais d'une paire d'éléments de connexion latéraux 7, par exemple du type Moduloclip (marque déposée) développé par le demandeur.

Dans l'exemple illustré, une telle poussette 10 comporte deux montants avant munis d'une paire de roues avant, deux montants arrière munis d'une paire de roues arrière, et une poignée coulissant par rapport aux montants avant. Cependant, tout type de poussette, et plus largement de « voiture d'enfants », peut être utilisé avec le support de l'invention, pourvu qu'elles soient munies de moyens de connexion avec ce support convertible.

Selon l'invention, ce support convertible 1 peut donc prendre deux positions respectives : une première position dite position allongée dans laquelle l'enfant est sensiblement allongé et au moins une deuxième position dite position assise dans laquelle l'enfant est sensiblement assis.

La **figure 4A** représente la position allongée. Dans cette position, le dossier 41, l'assise 42 et le soutien de jambes 43 sont sensiblement alignés dans un plan, appelé « plan de base » P_{B}, sensiblement horizontal. Ce plan de base P_{B} se trouve approximativement à hauteur des éléments 5 de connexion au châssis de la poussette 10. L'alignement du dossier 41, de l'assise 42, et de la portion de soutien de jambes 43 dans ce plan de base P_{B} permet d'obtenir une surface relativement plane permettant à un enfant de s'allonger.

Au dessus de ce plan de base P_{B} s'étend le cadre périphérique 3 du support convertible, qui définit les contours du support. Il s'étend, dans une proportion majoritaire (sur environ 3/4 de sa longueur), parallèlement au plan de base P_{B} dans un plan dit « supérieur » P_{S}. Plus précisément, une première partie du cadre 3 située sensiblement au dessus du dossier 41 et de l'assise 42 dans la position allongée, est placée dans ce plan supérieur P_{S}. Une seconde partie du cadre 3 située sensiblement au dessus de la portion de jambes 43 dans la position allongée quitte le plan supérieur P_{S} pour rejoindre le plan de base P_{B}.

Plus précisément, le cadre 3 comprend deux bords latéraux 31, 32, ou montants, un bord d'extrémité supérieure 33, ou traverse supérieure, et un bord d'extrémité inférieure 34, ou traverse inférieure. Les montants 31, 32 sont formés de deux portions définissant entre elles un angle α strictement inférieur à 180°. Cet angle est de préférence compris entre 150° et 170°. Une première portion, dite portion principale, (environ 3/4 de la longueur des montants) est située sensiblement au dessus du dossier 41 et de l'assise 42 dans la position allongée tandis qu'une seconde portion, dite portion finale (environ 1/4 à 1/5 de la longueur des montants) est située sensiblement au dessus de la portion de soutien de jambes 43 dans la position allongée.

La traverse supérieure 33 et la portion principale des bords latéraux 31, 32 sont situés dans le plan supérieur P_{S}. La portion finale des bords latéraux 31, 32 quitte quant à elle le plan supérieur P_{S} pour s'incliner vers le plan de base P_{B}. La traverse inférieure 34 du cadre 3 est ainsi reliée au soutien de jambes 43 dans le plan de base P_{B} via la liaison pivot 25_{D}.

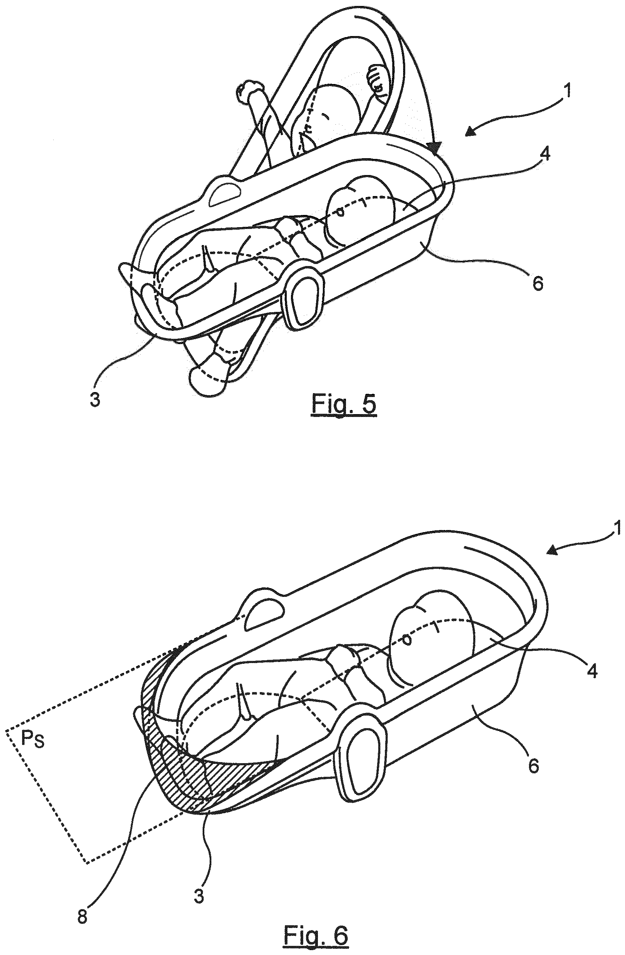

Le passage à la position assise, illustré schématiquement sur la **figure 5****,** est effectué par le basculement du cadre 3 autour du premier axe de rotation A, par l'intermédiaire de l'élément de structure 23. C'est la liaison pivot 25_{D} entre le cadre 3 et le soutien de jambes 43 qui guide le mouvement des différents éléments du fond 4 (dossier 41, assise 42, soutien de jambes 43) entre les configurations allongée **(****figures 2B, 2C, 2D****,** **4A****)** et assise **(****figures 1****,** **2A****,** **4B****).**

Ainsi, tels qu'illustrés sur la **figure 4B****,** les éléments dans la position assise sont inclinés entre eux de manière à former une assise permettant à un enfant de s'asseoir. Plus précisément, par rapport à la position allongée, le dossier 41 est redressé vers le haut, la portion de soutien de jambes 43 inclinée vers le bas, tandis que l'assise 42 reste sensiblement horizontale.

Lors du basculement du cadre 3 (pour faire passer le support en position assise), l'assise 42 reste sensiblement horizontale, tout en se décalant vers les montants latéraux de solidarisation et en se rapprochant de la traverse inférieure du cadre, guidée par le parallélogramme déformable constitué des suspentes 25_{A}, 25_{B}. Dans la position assise, l'assise 42 se trouve alors dans un plan parallèle au plan de base P_{B} mais situé en dessous de ce plan de base P_{B}. Le dossier 41 est guidé dans son mouvement par la suspente 25_{C}.

Le cadre 3 peut être verrouillé en position. Pour cela, il est prévu des moyens de verrouillage de la rotation de l'élément allongé 23 par rapport aux montants de solidarisation latéraux 21, 22.

Ces moyens de verrouillage peuvent être localisés directement au niveau de l'articulation entre l'élément de structure 23 et le montant respectif (par exemple, un bouton extérieur, localisé par exemple au niveau de l'articulation peut permettre à l'utilisateur de verrouiller ou déverrouiller le cadre). Ce cas de figure est illustré sur les **figures 1 à 3B****.**

Ils peuvent être déportés vers une autre zone du châssis de la poussette (par exemple, le bouton de verrouillage extérieur pourra être localisé à l'avant ou à l'arrière du cadre).

Comme illustré sur les **figures 5 à 10****,** le cadre 3 et le fond 4 formant sommier du support convertible 1 sont reliés par un élément intermédiaire, ou jupe périphérique 6, souple et/ou déformable par exemple réalisé en tissu. De préférence, le contour haut de la jupe entoure les tubulures du cadre 3, par exemple grâce à un ourlet.

La jupe 6, de par sa forme et le matériau utilisé, s'adapte à la position des trois portions articulées du fond 4 (à savoir le dossier 41, l'assise 42, et la portion de soutien de jambes 43).

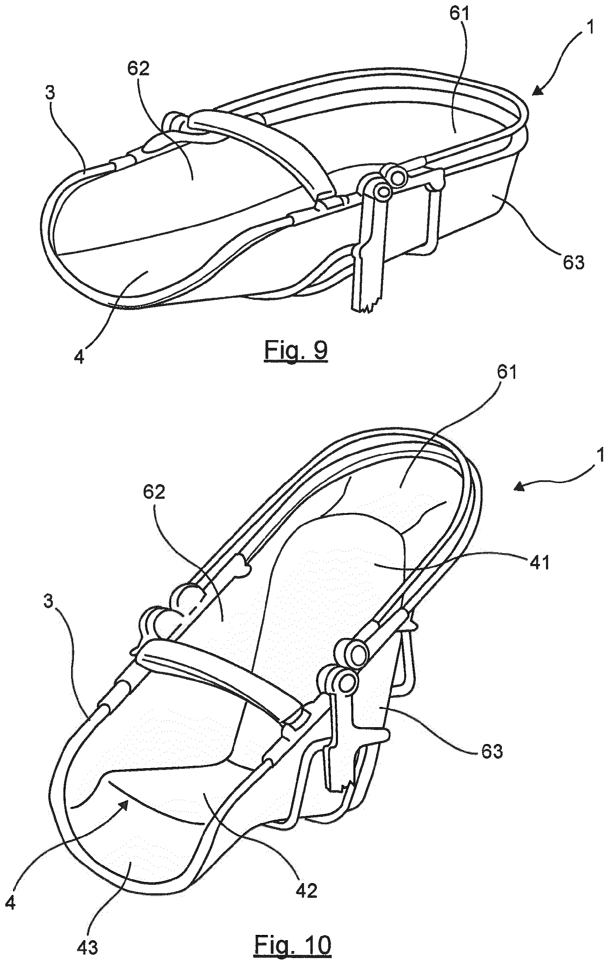

Elle comprend notamment une bande de tissu supérieure 61, et deux bandes de tissu latérales 62, 63. Lorsque le support est dans une position allongée **(****figure 9****),** la bande de tissu supérieure 61 et les bandes de tissu latérales 62, 63 sont situées dans un plan sensiblement vertical, perpendiculaire au plan du dossier 41. Ainsi, dans la position allongée du support convertible, elles forment des parois latérales de protection de la tête et du corps de l'enfant.

Lorsque le support passe dans une position assise **(****figure 10****),** et que le dossier 41 est redressé, la bande supérieure 61 est mise sous tension, et se retrouve sensiblement dans le prolongement du plan du dossier 41. Les bandes latérales 62, 63 s'étirent au niveau de l'assise 42 de façon à former des parois de protection latérales du corps de l'enfant.

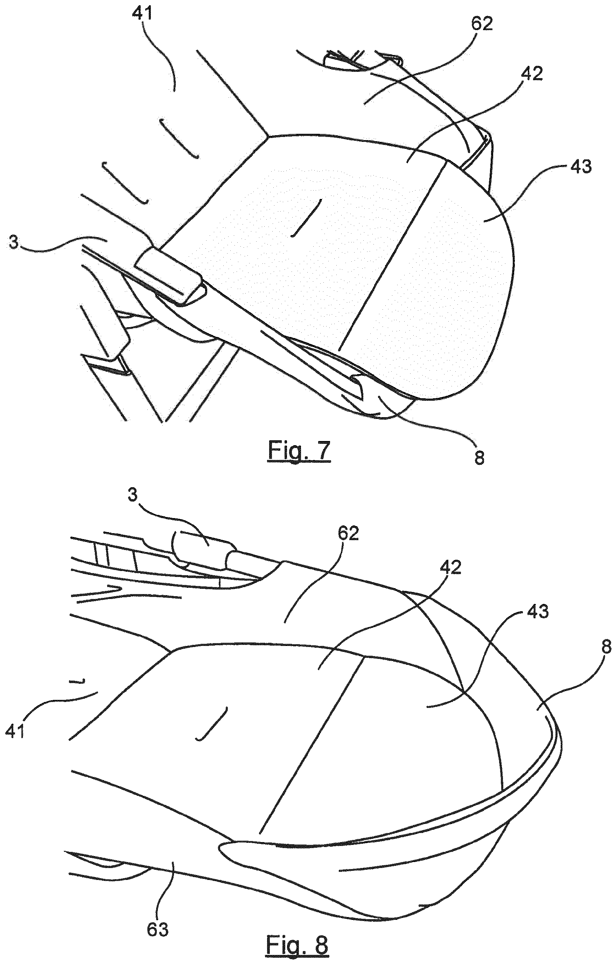

Les **figures 6** **et** **8** illustrent un aspect particulier de l'invention selon lequel le support convertible 1 peut être fermé par un élément de finition amovible 8 (et/ou escamotable) au voisinage du bord d'extrémité inférieure 34 du cadre 3.

Dans un autre mode de réalisation, cet élément de finition peut présenter un arceau, éventuellement plusieurs, articulé sur les montants du cadre, à proximité du point de flexion des montants (c'est-à-dire entre les portions principales et finales). Une toile de finition (il peut également s'agir d'un élément rigide ou partiellement rigide) est alors fixée d'une part sur l'arceau et d'autre part à la traverse inférieure ou aux portions finales des montants. Le ou les arceaux permettent à la toile de l'élément de finition d'être déployée et repliée à la manière d'un canopy.

Dans sa position déployée (qui est plus spécifiquement adoptée dans la configuration allongé), l'extrémité haute de l'élément de finition 8 vient s'aligner avec la portion principale des montants 31, 32 sensiblement dans le plan supérieur P_{S}, comme illustré sur la **figure 8****.** L'élément de finition 8 ainsi déployé forme une paroi au niveau des pieds de l'enfant, lui permettant d'être transporté, allongé, en toute sécurité.

Dans sa position repliée, ou escamotée (qui est plus spécifiquement adoptée dans la configuration assise), l'élément de finition 8 peut être retiré ou son extrémité haute abaissée de manière à venir s'aligner dans le plan de base P_{B} sensiblement au contact de la traverse. La **figure 7** représente l'élément de finition 8 en position repliée, sous la portion de soutien des jambes 43. Cette opération permet d'ouvrir un espace pour ne pas gêner le positionnement des pieds et/ou des jambes de l'enfant.

## Revendications

1. Support convertible (1) pour poussette pour enfant, comprenant un cadre (3) portant trois éléments de réception d'un enfant articulés deux à deux, de façon à pouvoir prendre au moins deux positions :
- une position allongée, dans laquelle ledit cadre (3) s'étend essentiellement dans un plan supérieur (P_{S}) sensiblement horizontal et lesdits éléments de réception sont sensiblement alignés dans un plan de base (P_{B}) sensiblement horizontal, de façon à recevoir un enfant en position allongée ;
- au moins une position assise, dans laquelle lesdits éléments de réception sont disposés de façon à définir respectivement un élément de soutien de jambes (43), une assise (42) et un dossier (41), de façon à recevoir un enfant en position assise,
ledit cadre (3) présentant deux montants de cadre latéraux (31, 32), et une traverse supérieure (33) et une traverse inférieure (34) reliant lesdits montants de cadre (31, 32), **caractérisé en ce que** lesdits montants de cadre (31, 32) présentent deux portions formant entre elles un angle (α) strictement inférieur à 180°, de façon que, dans ladite position allongée, une portion principale desdits montants (31, 32) s'étende sensiblement horizontalement depuis la traverse supérieure (33), et qu'une portion finale s'étende vers le bas depuis ladite portion principale vers ladite traverse inférieure (34), pour que celle-ci s'étende sensiblement dans ledit plan de base (P_{B}).

2. Support convertible selon la revendication 1, **caractérisé en ce que** ledit élément de soutien de jambes (43) est articulé sur ladite traverse inférieure (34).

3. Support convertible selon la revendication 2, **caractérisé en ce que** ladite traverse inférieure (34) porte une articulation unique (25_{D}) en position centrale.

4. Support convertible selon les revendications 1 à 3, **caractérisé en ce que** ladite portion finale des montants de cadre (31, 32) s'étend sensiblement verticalement, dans ladite au moins une position assise.

5. Support convertible selon les revendications 1 à 4, **caractérisé en ce qu'**il comprend un élément de finition (8) amovible et/ou escamotable, apte à fermer le contour défini dans ledit plan supérieur (P_{S}) par ladite traverse supérieure (33) et lesdites portions principales des montants de cadre (31, 32), dans ladite position allongée.

6. Support convertible selon la revendication 5, **caractérisée en ce que** ledit élément de finition (8) présente au moins un arceau articulé sur lesdits montants de cadre (31, 32), au voisinage de la liaison entre leurs portion principale et leur portion finale.

7. Support convertible selon la revendication 6, **caractérisée en ce que** ledit arceau porte un premier bord d'une toile de finition (6), également solidarisée à ladite traverse inférieure (34) et/ou auxdites portions finales des montants latéraux (31, 32).

8. Support selon l'une quelconque des revendications 1 à 7, **caractérisée en ce qu'**il comprend deux montants de solidarisation latéraux (21, 22) verticaux portant en partie supérieure ledit cadre (3) et en partie inférieure des connecteurs (7) de solidarisation à un châssis de poussette (10).

9. Support convertible selon la revendication 8, **caractérisée en ce que** lesdits montants de solidarisation (21, 22) portent, mobiles en rotation, deux suspentes (25_{A}, 25_{B}) supportant ladite assise (42) et s'étendant parallèlement l'une à l'autre.

10. Support convertible selon la revendication 9, **caractérisée en ce que** chacun desdits montants de solidarisation (21, 22) porte une traverse d'accrochage horizontale formant croix avec ledit montant de solidarisation (21, 22), lesdites suspentes (25_{A}, 25_{B}) étant montées sur ladite traverse d'accrochage, de part et d'autre dudit montant de solidarisation (21, 22).

11. Support convertible (1) selon la revendication 10, **caractérisée en ce que** ladite traverse d'accrochage s'étend sensiblement à égale distance dudit plan supérieur (P_{S}) et dudit plan de base (P_{B}), dans la position allongée.

12. Support convertible (1) selon l'une quelconque des revendications 1 à 11, **caractérisée en ce qu'**une suspente (25_{C}) dudit dossier (41) est articulée sur ledit cadre (3).

13. Support convertible (1) selon la revendication 12, **caractérisée en ce que** ladite suspente (25_{C}) est articulée par rapport audit dossier (41) sensiblement en son milieu.

14. Poussette (10) comprenant un support convertible (1) selon l'une quelconque des revendications 1 à 13, comprenant un cadre (3) portant trois éléments de réception d'un enfant articulés deux à deux, de façon à pouvoir prendre au moins deux positions :
- une position allongée, dans laquelle ledit cadre (3) s'étend essentiellement dans un plan supérieur (P_{S}) sensiblement horizontal et lesdits éléments de réception sont sensiblement alignés dans un plan de base (P_{B}) sensiblement horizontal, de façon à recevoir un enfant en position allongée ;
- au moins une position assise, dans laquelle lesdits éléments de réception sont disposés de façon à définir respectivement un soutien de jambes (43), une assise (42) et un dossier (41), de façon à recevoir un enfant en position assise,
ledit cadre (3) présentant deux montants de cadre latéraux (31, 32), et une traverse supérieure (33) et une traverse inférieure (34) reliant lesdits montants de cadre (31, 32), **caractérisée en ce que** lesdits montants de cadre (31, 32) présentent deux portions formant entre elles un angle (α) inférieur à 180°, de façon que, dans ladite position allongée, une portion principale desdits montants (31, 32) s'étende sensiblement horizontalement depuis la traverse supérieure (33), et qu'une portion finale s'étende vers le bas depuis ladite portion principale vers ladite traverse inférieure (34), pour que celle-ci s'étende sensiblement dans ledit plan de base (P_{B}).

## Patentansprüche

1. Konvertierbares Gestell (1) für einen Kinderwagen, das einen Rahmen (3) enthält, welcher drei Elemente zur Aufnahme eines Kindes trägt, die paarweise gelenkartig miteinander verbunden sind, um mindestens zwei Stellungen einnehmen zu können:
- eine ausgestreckte Stellung, in welcher der Rahmen (3) sich im Wesentlichen in eine im Wesentlichen horizontale, obere Ebene (P_{S}) erstreckt und die Elemente zur Aufnahme im Wesentlichen in einer im Wesentlichen horizontalen Grundebene (P_{B}) ausgerichtet sind, um ein Kind in ausgestreckter Stellung aufzunehmen;
- mindestens eine sitzende Stellung, in welcher die Elemente zur Aufnahme angeordnet sind, um jeweils ein Element zur Unterstützung der Beine (43), eine Sitzfläche (42) und eine Rückenstütze (41) zu definieren, um ein Kind in sitzender Stellung aufzunehmen,
wobei der Rahmen (3) zwei seitliche Rahmenstützen (31, 32), und eine obere Querstrebe (33) und eine untere Querstrebe (34), die mit den Rahmenstützen (31, 32) verbunden sind, aufweist,
**dadurch gekennzeichnet, dass** die Rahmenstützen (31, 32) zwei Abschnitte aufweisen, die zwischen sich einen streng kleiner als 180° betragenden Winkel (α) bilden, sodass, in der ausgestreckten Stellung, ein Hauptabschnitt der Stützen (31, 32) sich im Wesentlichen horizontal von der oberen Querstrebe (33) aus erstreckt, und dass ein Endabschnitt sich abwärts von dem Hauptabschnitt aus in Richtung der unteren Querstrebe (34) erstreckt, damit diese sich im Wesentlichen in der Grundebene (P_{B}) erstreckt.

2. Konvertierbares Gestell nach Anspruch 1, **dadurch gekennzeichnet, dass** das Element zur Unterstützung der Beine (43) mit der unteren Querstrebe (34) gelenkartig verbunden ist.

3. Konvertierbares Gestell nach Anspruch 2, **dadurch gekennzeichnet, dass** die untere Querstrebe (34) ein einziges Gelenk (25_{D}) in einer mittleren Position trägt.

4. Konvertierbares Gestell nach einem der Ansprüche 1 bis 3, **dadurch gekennzeichnet, dass** der Endabschnitt der Rahmenstützen (31, 32) sich in der mindestens einen sitzenden Stellung im Wesentlichen vertikal erstreckt.

5. Konvertierbares Gestell nach einem der Ansprüche 1 bis 4, **dadurch gekennzeichnet, dass** es ein abnehmbares und/oder einklappbares Abschlusselement (8) enthält, das dazu geeignet ist, um in der ausgestreckten Stellung die Kontur, die in der oberen Ebene (P_{S}) durch die obere Querstrebe (33) und die Hauptabschnitte der Rahmenstützen (31, 32) festgelegt ist, zu schließen.

6. Konvertierbares Gestell nach Anspruch 5, **dadurch gekennzeichnet, dass** das Abschlusselement (8) mindestens einen Bogen aufweist, der mit den Rahmenstützen (31, 32) in der Nähe von der Verbindung zwischen ihren Hauptabschnitten und ihrem Endabschnitt gelenkartig verbunden ist.

7. Konvertierbares Gestell nach Anspruch 6, **dadurch gekennzeichnet, dass** der Bogen einen ersten Rand eines Abschlusstuchs (6) trägt, das gleichsam an der unteren Querstrebe (34) und/oder an den Endabschnitten der seitlichen Stützen (31, 32) befestigt ist.

8. Konvertierbares Gestell nach einem der Ansprüche 1 bis 7, **dadurch gekennzeichnet, dass** es zwei seitliche, vertikale Befestigungsstützen (21, 22), die im oberen Teil den Rahmen (3) und im unteren Teil Konnektoren (7) zur Befestigung an einem Kinderwagenfahrgestell (10) tragen.

9. Konvertierbares Gestell nach Anspruch 8, **dadurch gekennzeichnet, dass** die Befestigungsstützen (21, 22) zwei drehbewegliche Aufhängungen (25A, 25B) tragen, die die Sitzfläche (42) stützen und sich parallel zueinander erstrecken.

10. Konvertierbares Gestell nach Anspruch 9, **dadurch gekennzeichnet, dass** jede der Befestigungsstützen (21, 22) eine horizontale Kopplungsquerstrebe trägt, die mit der Befestigungsstütze (21, 22) ein Kreuz bildet, wobei die Aufhängungen (25A, 25B) auf beiden Seiten der Befestigungsstütze (21, 22) an der Kopplungsquerstrebe befestigt sind.

11. Konvertierbares Gestell nach Anspruch 10, **dadurch gekennzeichnet, dass** die Kopplungsquerstrebe sich in der ausgestreckten Stellung im Wesentlichen gleich des Abstandes der oberen Ebene (PS) und der Grundebene (PB) erstreckt.

12. Konvertierbares Gestell nach einem der Ansprüche 1 bis 11, **dadurch gekennzeichnet, dass** eine Aufhängung (25C) der Rückenstütze (41) mit dem Rahmen (3) gelenkartig verbunden ist.

13. Konvertierbares Gestell nach Anspruch 12, **dadurch gekennzeichnet, dass** die Aufhängung (25C) bezogen auf die Rückenstütze (41) im Wesentlichen in ihrer Mitte gelenkartig verbunden ist.

14. Kinderwagen (10), enthaltend ein konvertierbares Gestell (1) nach einem der Ansprüche 1 bis 13, das einen Rahmen (3) enthält, welcher drei paarweise gelenkartig miteinander verbundene Elemente zur Aufnahme eines Kindes trägt, um mindestens zwei Stellungen einnehmen zu können:
- eine ausgestreckte Stellung, in welcher der Rahmen (3) sich im Wesentlichen in eine im Wesentlichen horizontale, obere Ebene (P_{S}) erstreckt und die Aufnahmeelemente im Wesentlichen in einer im Wesentlichen horizontalen Grundebene (P_{B}) ausgerichtet sind, um ein Kind in ausgestreckter Stellung aufzunehmen;
- mindestens eine sitzende Stellung, in welcher die Aufnahmeelemente angeordnet sind, um jeweils eine Unterstützung der Beine (43), eine Sitzfläche (42) und eine Rückenstütze (41) zu definieren, um ein Kind in sitzender Stellung aufzunehmen,
wobei der Rahmen (3) zwei seitliche Rahmenstützen (31, 32), und eine obere Querstrebe (33) und eine untere Querstrebe (34), die mit den Rahmenstützen (31, 32) verbunden sind, aufweist,
**dadurch gekennzeichnet, dass** die Rahmenstützen zwei Abschnitte aufweisen, die zwischen sich einen streng kleiner als 180° betragenden Winkel (α) bilden, sodass, in der ausgestreckten Stellung, ein Hauptabschnitt der Stützen (31, 32) sich im Wesentlichen horizontal von der oberen Querstrebe (33) aus erstreckt, und dass ein Endabschnitt sich abwärts von dem Hauptabschnitt aus in Richtung der unteren Querstrebe (34) erstreckt, damit diese sich im Wesentlichen in der Grundebene (P_{B}) erstreckt.

## Claims

1. Convertible support (1) for a children's pushchair, comprising a frame (3) supporting three elements for receiving a child, hinged in pairs, in order to be able to take on at least two positions:
- a laid-back position, in which said frame (3) essentially extends in a substantially horizontal upper plane (P_{S}) and said receiving elements are substantially aligned in a substantially horizontal base plane (P_{B}), so as to receive a child lying down;
- at least one seated position, in which said receiving elements are positioned so as to respectively define a leg rest element (43), a seat base (42) and a backrest (41), in order to receive a child sitting up,
said frame (3) having two lateral frame uprights (31, 32), one top crosspiece (33) and one bottom crosspiece (34) connecting said frame uprights (31, 32),
**characterised in that** said frame uprights (31, 32) have two portions forming an angle (α) therebetween that is strictly less than 180°, such that, in said laid-back position, a main portion of said uprights (31, 32) extends substantially horizontally from the top crosspiece (33), and such that a final portion extends downwards from said main portion towards said bottom crosspiece (34), such that the latter substantially extends in said base plane (P_{B}).

2. Convertible support according to claim 1, **characterised in that** said leg rest element (43) is hinge-mounted on said bottom crosspiece (34).

3. Convertible support according to claim 2, **characterised in that** said bottom crosspiece (34) supports a single hinged joint (25_{D}) in the central position.

4. Convertible support according to claims 1 to 3, **characterised in that** said final portion of the frame uprights (31, 32) extends substantially vertically, in said at least one seated position.

5. Convertible support according to claims 1 to 4, **characterised in that** it comprises a removable and/or retractable finishing element (8), capable of closing the contour defined in said upper plane (P_{S}) by said top crosspiece (33) and said main portions of the frame uprights (31, 32), in said laid-back position.

6. Convertible support according to claim 5, **characterised in that** said finishing element (8) has at least one arch hinge-mounted on said frame uprights (31, 32), in the vicinity of the connection between the main portion and the final portion thereof.

7. Convertible support according to claim 6, **characterised in that** said arch supports a first edge of a finishing canvas (6), also secured to said bottom crosspiece (34) and/or to said final portions of the lateral uprights (31, 32).

8. Support according to any of claims 1 to 7, **characterised in that** it comprises two vertical, lateral fastening uprights (21, 22) supporting said frame (3) in the upper part thereof, and connectors (7) for fastening to a chassis of a pushchair (10) in the lower part thereof.

9. Convertible support according to claim 8, **characterised in that** said fastening uprights (21, 22) carry two suspension means (25_{A}, 25_{B}), capable of moving in rotation, which suspension means support said seat base (42) and extend parallel to each other.

10. Convertible support according to claim 9, **characterised in that** each of said fastening uprights (21, 22) supports a horizontal coupling crosspiece forming a cross with said fastening upright (21, 22), said suspension means (25_{A}, 25_{B}) being mounted on said coupling crosspiece, on either side of said fastening upright (21, 22).

11. Convertible support (1) according to claim 10, **characterised in that** said coupling crosspiece extends substantially at an equal distance from said upper plane (P_{S}) and from said base plane (P_{B}), in the laid-back position.

12. Convertible support (1) according to any of claims 1 to 11, **characterised in that** a suspension means (25_{C}) of said backrest (41) is hinge-mounted on said frame (3).

13. Convertible support (1) according to claim 12, **characterised in that** said suspension means (25_{C}) is hinged relative to said backrest (41) substantially at the middle thereof.

14. Pushchair (10) comprising a convertible support (1) according to any of claims 1 to 13, comprising a frame (3) supporting three elements for receiving a child, hinged in pairs, in order to be able to take on at least two positions:
- a laid-back position, in which said frame (3) essentially extends in a substantially horizontal upper plane (P_{S}) and said receiving elements are substantially aligned in a substantially horizontal base plane (P_{B}), so as to receive a child lying down;
- at least one seated position, in which said receiving elements are positioned so as to respectively define a leg rest (43), a seat base (42) and a backrest (41), in order to receive a child sitting up,
said frame (3) having two lateral frame uprights (31, 32), one top crosspiece (33) and one bottom crosspiece (34) connecting said frame uprights (31, 32),
**characterised in that** said frame uprights (31, 32) have two portions forming an angle (α) therebetween that is less than 180°, such that, in said laid-back position, a main portion of said uprights (31, 32) extends substantially horizontally from the top crosspiece (33), and such that a final portion extends downwards from said main portion towards said bottom crosspiece (34), such that the latter substantially extends in said base plane (P_{B}).
